# EUROPEAN PATENT APPLICATION

(11) **EP 2 410 153 A2**
(43) Date of publication of application: **25.01.2012**
(21) Application number: 11173930.6
(22) Date of filing: 14.07.2011
(51) Int. Cl.: F02C 7/143

(54) **A hybrid power generation system and a method thereof**

(30) Priority: 23.07.2010 US 842286
(71) Applicant: General Electric Company, Schenectady, NY 12345 (US)
(72) Inventor: Freund, Sebastian Walter, Niskayuna, NY New York 12309 (US); Frey, Thomas Johannes, Niskayuna, NY New York 12309 (US); Huck, Pierre Sebastien, Niskayuna, NY New York 12309 (US)
(74) Representative: Gray, Thomas

(57) **Abstract**

A hybrid power generation system (10) includes a gas turbine engine system (12) and a supercritical rankine cycle system (14). The gas turbine engine system (12) includes a first compressor (18), an intercooler (34), and a second compressor (20). A first compressor (18) is configured to compress an inlet airflow (30) to produce a first outlet airflow (32) at a first pressure. An intercooler (34) is coupled to the first compressor (18) and configured to cool the first outlet airflow (32) exiting the first compressor (18) to produce a second outlet airflow (36). A second compressor (20) is coupled to the intercooler (34) and configured to compress the second outlet airflow (36) exiting the intercooler (34) to produce a third outlet airflow (38) at a second pressure. The supercritical rankine cycle system (14) is coupled to the gas turbine engine system (12). The supercritical rankine cycle system (14) is coupled to the intercooler (34) to circulate a working fluid in heat exchange relationship with the first outlet airflow (32) to heat the working fluid at a supercritical pressure from a first temperature to a second temperature above a critical temperature of the working fluid and to cool the first outlet airflow (32) exiting the first compressor (18).

## Description

### BACKGROUND

The invention relates generally to power generation systems, and more particularly to a hybrid power generation system having a gas turbine system and a rankine cycle system.

Enormous amounts of waste heat are generated by a wide variety of industrial and commercial processes and operations. Example sources of waste heat include heat from space heating assemblies, steam boilers, engines, and cooling systems. When waste heat is low grade, such as waste heat having a temperature, for example, below 300 degrees Celsius (570 degrees Fahrenheit), conventional heat recovery systems do not operate with sufficient efficiency to make recovery of energy cost-effective. The net result is that vast quantities of waste heat are simply dumped into the atmosphere, ground, or water.

Generally, in a gas turbine engine system, air is compressed in a compressor or a multi-stage compressor. Compressed air is mixed with fuel such as natural gas, light fuel oil, or the like and combusted in a combustion chamber. Exhaust gas generated due to combustion is used to drive a turbine, which may be used to generate power or effectuate rotation. During warm days, the gas turbine's performance may be reduced due to elevated air temperature at an inlet of the compressor. The engine efficiency may be enhanced by intercooling air between the compressor stages. Traditionally, cooling towers are used to discharge the heat from intercooling of the air between the compressor stages to the ambient. Intercooler heat is usually wasted as it is discharged to the environment through the cooling towers. Also, large heat exchangers and fans are required for discharging this heat at low temperatures to the ambient.

In another application, a rankine cycle system may be used to generate electricity without increasing the output of gas turbine emissions. A fundamental rankine cycle typically includes a turbo generator, an evaporator/boiler, a condenser, and a liquid pump. Conventionally, in such rankine cycle systems, the working fluid is preheated, evaporated and superheated before the expansion process. However, a large fraction of heat is extracted at a boiling temperature to heat the working fluid leading to a "pinch-point" problem that limits the amount of heat the can be extracted by heating the working fluid or the lowest possible mean temperature difference between air and working fluid.

Accordingly, there is a need for an enhanced system and method that overcomes the deficiencies discussed above.

### BRIEF DESCRIPTION

In accordance with one exemplary embodiment of the present invention, a hybrid power generation system is disclosed. The hybrid power generation system includes a gas turbine engine system and a supercritical rankine cycle system. The gas turbine engine system includes a first compressor, an intercooler, and a second compressor. A first compressor is configured to compress an inlet airflow to produce a first outlet airflow at a first pressure. An intercooler is coupled to the first compressor and configured to cool the first outlet airflow exiting the first compressor to produce a second outlet airflow. A second compressor is coupled to the intercooler and configured to compress the second outlet airflow exiting the intercooler to produce a third outlet airflow at a second pressure. The supercritical rankine cycle system is coupled to the gas turbine engine system. The supercritical rankine cycle system is coupled to the intercooler to circulate a working fluid in heat exchange relationship with the first outlet airflow to heat the working fluid at a supercritical pressure from a first temperature to a second temperature above a critical temperature of the working fluid and to cool the first outlet airflow exiting the first compressor.

In accordance with another exemplary embodiment, a supercritical rankine cycle system is coupled to the gas turbine engine system via an intermediate fluid loop configured to circulate a heat transfer fluid. The heat transfer fluid is circulated in heat exchange relationship with the first outlet airflow and the working fluid is circulated in heat exchange relationship with the heat transfer fluid to heat the working fluid at a supercritical pressure from a first temperature to a second temperature above a critical temperature of the working fluid and to cool the first outlet airflow exiting the first compressor.

In accordance with another exemplary embodiment of the present invention, a method thereof related to the hybrid power generation system is disclosed.

### DRAWINGS

These and other features, aspects, and advantages of the present invention will become better understood when the following detailed description is read with reference to the accompanying drawings in which like characters represent like parts throughout the drawings, wherein:
FIG. 1 is a diagrammatical representation of a hybrid power generation system having a gas turbine engine system and a supercritical rankine cycle system in accordance with an exemplary embodiment of the present invention;
FIG. 2 is a graphical representation of a temperature (T) versus entropy (S) to compare a conventional subcritical rankine cycle system with a supercritical rankine cycle system in accordance with an exemplary embodiment of the present invention;
FIG. 3 is a diagrammatical representation of a counter flow intercooler in accordance with an exemplary embodiment of the present invention;
FIG. 4 is a diagrammatical representation of a counter flow intercooler in accordance with an exemplary embodiment of the present invention; and
FIG. 5 is a diagrammatical representation of a hybrid power generation system having a gas turbine engine system coupled to a supercritical rankine cycle system via an intermediate fluid loop in accordance with an exemplary embodiment of the present invention.

### DETAILED DESCRIPTION

In accordance with the aspects of the present invention, a hybrid power generation system is disclosed. The hybrid power generation system includes a gas turbine engine system and a supercritical rankine cycle system. The gas turbine engine system includes a first compressor, an intercooler, a second compressor, combustor and a turbine. A first compressor is configured to compress an inlet airflow to produce a first outlet airflow at a first pressure. An intercooler is coupled to the first compressor and configured to cool the first outlet airflow exiting the first compressor to produce a second outlet airflow. A second compressor coupled to the intercooler and configured to compress the second outlet airflow exiting the intercooler to produce a third outlet airflow at a second pressure. The supercritical rankine cycle system is coupled to the intercooler to circulate a working fluid in heat exchange relationship with the first outlet airflow to heat the working fluid at a supercritical pressure from a first temperature to a second temperature above a critical temperature of the working fluid and to cool the first outlet airflow exiting the first compressor. In certain embodiments, the supercritical rankine cycle system is coupled to the intercooler via an intermediate fluid loop. As discussed herein, the heat from intercooling a gas turbine engine compressor can be utilized for power generation via a supercritical rankine cycle system. Additionally, the supercritical rankine cycle system provides adequate cooling for the compressed air in between two stages of the compressor in the gas turbine engine system.

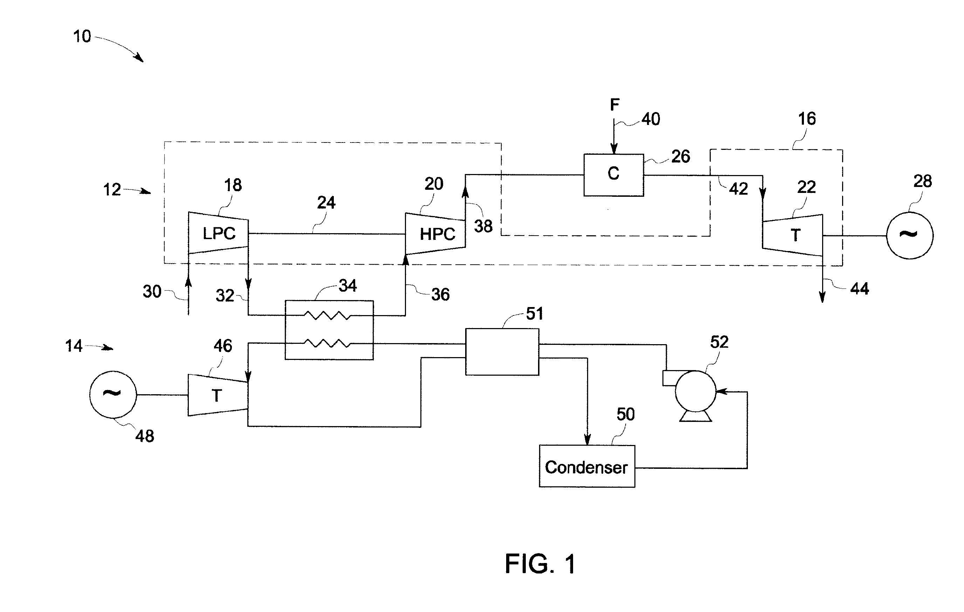

Referring to FIG. 1, an exemplary hybrid power generation system 10 is disclosed. The hybrid power generation system 10 includes a gas turbine engine system 12 and a supercritical rankine cycle system 14. The gas turbine engine system 12 in accordance with the aspects of the present invention includes a gas turbine engine 16. The gas turbine engine 16 includes a first compressor (i.e. low-pressure compressor) 18, a second compressor (i.e. high-pressure compressor) 20, and a turbine 22 mutually coupled via a gas turbine shaft 24. The second compressor 20 is coupled to a combustor 26. An outlet of the combustor 26 is coupled to an inlet of the turbine 22. A load generator 28 is mechanically coupled to the turbine 22 and configured to generate power. The gas turbine engine 16 is operated to maintain the load generator 28 at desired speed and load.

The first compressor 18 draws inlet air 30 (i.e. ambient air) through a filter (not shown) and compresses air 30 to produce a first outlet airflow 32 at a first pressure. The temperature of air 30 is increased due to compression. The gas turbine engine system 12 includes an intercooler 34 coupled between the first compressor 18 and the second compressor 20. The compressed air (i.e. first outlet air flow) 32 from the first compressor 18 is passed through the intercooler 34. During operation, the compressed air 32 flows through the intercooler 34, such that the temperature of air is reduced prior to delivery into the second compressor 20. In the exemplary embodiment, a working fluid circulated in the supercritical rankine cycle system 14 is utilized to facilitate removal of heat from the compressed air to produce a second outlet airflow 36. The cooled compressed air (i.e. second outlet air flow) 36 from the intercooler 34 is fed to the second compressor 20. The second compressor 20 is configured to compress the cooled air 36 to produce a third outlet airflow 38 at a second pressure that is higher than the first pressure.

A fuel 40 is mixed with the compressed air (i.e. third outlet air flow) 38 from the second compressor 20 and combusted within the combustor 26 of the engine system 12 to increase the temperature of the third outlet airflow 38. A combustion exhaust gas 42 from the combustor 26 is fed to the turbine 22. The turbine 22 extracts energy by expansion of the exhaust gas 42 for rotating the gas turbine shaft 24 coupled to the compressors 18, 20 and the generator 28. The expanded gases 44 are discharged through an outlet of the turbine 22.

In the illustrated embodiment, the supercritical rankine cycle system 14 is coupled to the intercooler 34. The working fluid is circulated through the supercritical rankine cycle system 14. In certain embodiments, the supercritical rankine cycle system 14 is a supercritical organic rankine cycle system and the working fluid is an organic working fluid. The organic working fluid may include butane, propane, pentane, cyclohexane, cyclopentane, thiophene, ketones, aromatics, and refrigerants such as R134a, R245fa, or combinations thereof. In certain other embodiments, the working fluid includes a non-organic working fluid.

The supercritical rankine cycle system 14 is coupled to the intercooler 34 in such a way so as to circulate the working fluid in heat exchange relationship with the first outlet airflow 32. In certain embodiments, the working fluid and the first outlet airflow 32 are circulated through the intercooler 34 in a counter flow direction. The working fluid is heated at a pressure above its critical pressure from a first temperature to a second temperature above its critical temperature. Simultaneously, the first outlet airflow exiting the first compressor is cooled adequately. The working fluid of the supercritical rankine cycle system 14 is used as a coolant in the intercooler 34 to facilitate removal of heat from the compressed air 32 provided by the first compressor 18. While compressed air 32 from the first compressor 18 is cooled before it enters the second compressor 20, the working fluid is heated.

The working fluid at a supercritical state is then passed through an expander 46 (which in one example comprises a radial type expander) to drive a generator 48 configured to generate power. During the expansion process, the working fluid undergoes an expansion to a lower pressure and typically enters a superheated fluid state. It should be noted herein that the pressure is mentioned as lower compared to a pressure of a working fluid after expansion in a subcritical rankine cycle system. In certain other exemplary embodiments, the expander 46 may be an axial type expander, radial type expander, or high temperature screw type expander, reciprocating type expander, or a combination thereof. After passing through the expander 46, the working fluid vapor at a relatively lower pressure and lower temperature is passed through the condenser 50. In the condenser 50, the working fluid vapor is condensed into a liquid, which is then pumped via a pump 52 to the intercooler 34. The cycle may then be repeated. Depending on the cycle layout, prior to entering the condenser 50, the working fluid may be passed through a recuperator 51 for preheating the liquid working fluid. In such an embodiment, the recuperator 51 is configured to preheat the condensed working fluid fed from the condenser 50 before being fed to the intercooler 34, by circulating the condensed working fluid in heat exchange relationship with the expanded working fluid fed from the expander 46.

As discussed above, in intercooled gas turbine engine systems, the intercooler heat is usually wasted and large heat exchangers and fans are required for discharging such heat at low temperatures. Also, conventionally, in rankine cycle systems, the working fluid is preheated, evaporated and superheated before the expansion process. This leads to a "pinch-point" problem that limits the possible amount of heat extraction from the air by heating the working fluid or the lowest possible mean temperature difference between air (first outlet airflow) and working fluid. The temperature difference between the first outlet airflow 32 and the working fluid is controlled by controlling a mass flow of the working fluid through the intercooler 34 via the pump 52.

In accordance with the aspects of the present invention, the working fluid of the supercritical rankine cycle system is heated at a supercritical pressure from a first temperature to a second temperature above the critical temperature of the working fluid without phase change of the working fluid. In other words, the working fluid is heated at supercritical pressure without constant temperature evaporation. Accordingly, the "pinch-point" problem is avoided. Hence the heat can be extracted more efficiently with lower mean temperature difference between air (first outlet airflow) and working fluid. Since the irreversibility of the heat exchange process is lower, heat can be extracted more efficiently, and the working fluid temperature and mass flow of the working fluid is relatively higher. Power generation efficiency is enhanced and the cooling requirements of the intercooler are adequately met.

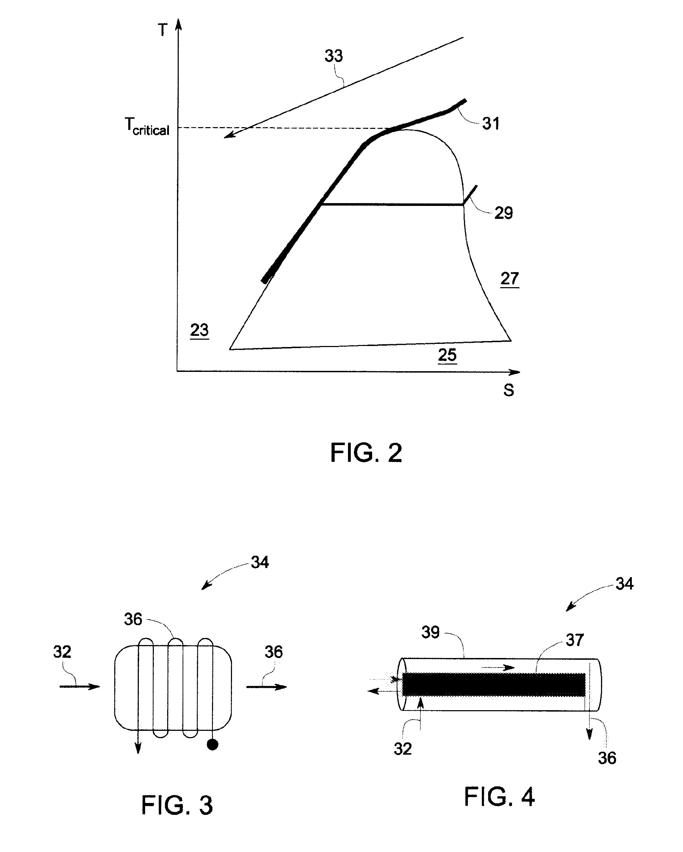

Referring to FIG. 2, a graphical representation of a temperature (T) versus entropy (S) to compare a conventional subcritical rankine cycle system with a supercritical rankine cycle system in accordance with an exemplary embodiment of the present invention. Liquid region, two phase region, and vapor region of the working fluid are presented by reference numerals 23, 25, and 27 respectively. A curve representative of a conventional subcritical rankine cycle system is indicated by the reference numeral 29. A curve representative of the supercritical rankine cycle system in accordance with an exemplary embodiment of the present invention is represented by the reference numeral 31. A cooling curve representative of the first outlet airflow fed from the first compressor is indicated by the reference numeral 33.

It should be noted herein that in the illustrated FIG. 2, a reduced gap between the cooling curve 33 of the first outlet airflow and the heating curve 31 of the supercritical rankine cycle system extraction of heat more efficiently with lower mean temperature difference between air and working fluid. Due to the positive slope of the vapor line, the working fluid undergoes an expansion and typically enters a superheated fluid state.

Referring to FIG. 3, the intercooler 34 in accordance with an exemplary embodiment of the present invention is disclosed. In the illustrated embodiment, the intercooler 34 is a counter-flow heat exchanger. The hot first outlet airflow 32 and the cold second outlet airflow 36 are shown along one direction and the flow of the working fluid through a serpentine coil tube 35 is shown along an opposite direction.

Referring to FIG. 4, the intercooler 34 in accordance with an exemplary embodiment of the present invention is disclosed. In the illustrated embodiment, the intercooler 34 is a counter-flow heat exchanger. The intercooler 34 includes a fin-tube coil 37 disposed inside a pressure shell 39. The working fluid flows through the fin-tube coil 37. The hot first outlet airflow 32 and the cold second outlet airflow 36 are shown along a counter flow direction to the flow of the working fluid.

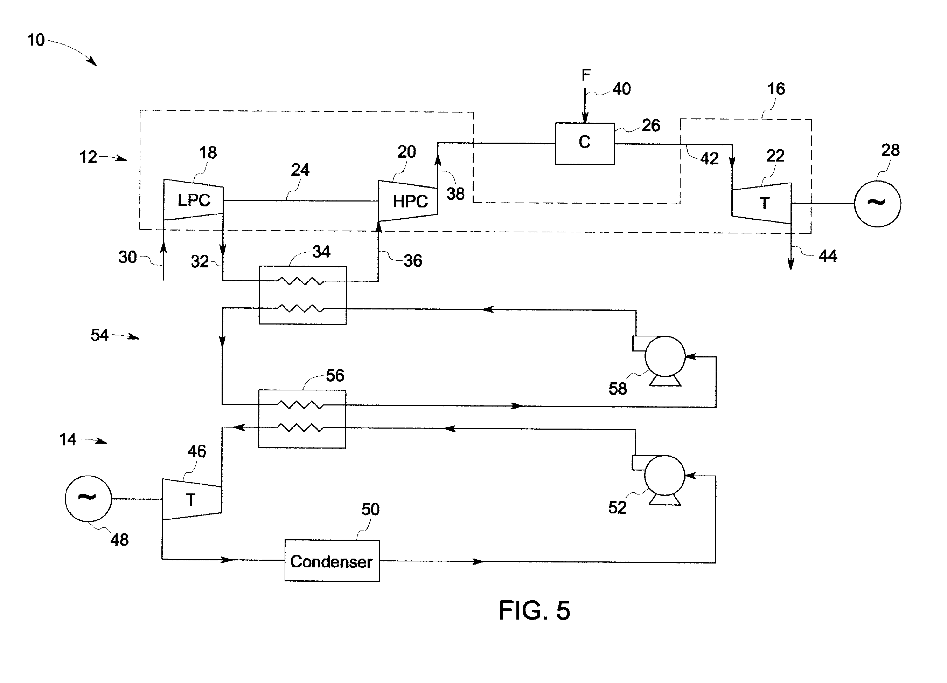

Referring to FIG. 5, an exemplary hybrid power generation system 10 is disclosed. The system 10 is similar to the embodiment illustrated in FIG.1, except that the rankine cycle system 14 is coupled to the gas turbine engine system 12 via an intermediate fluid loop 54. In the illustrated embodiment, a heat transfer fluid is circulated through the intermediate fluid loop 54. In one embodiment, the heat transfer fluid is water. In another embodiment, the heat transfer fluid is thermal oil. Such an embodiment may be employed to separate the working fluid from the air in case of any leakage.

The intermediate loop 54 is coupled to the intercooler 34 in such a way so as to circulate the heat transfer fluid in heat exchange relationship with the first outlet airflow 32. In certain embodiments, the heat transfer fluid and the first outlet airflow 32 are circulated through the intercooler 34 in a counter flow direction. The intercooler 34 is used to heat the heat transfer fluid to a relatively higher temperature using the first outlet airflow 32. Accordingly, the first outlet airflow 32 is also adequately cooled to produce the second outlet airflow 36. The second outlet airflow 32 is then fed to the second compressor 20 as discussed in the previous embodiment. The hot heat transfer fluid from the intercooler 34 is circulated in heat exchange relationship with the working fluid of the supercritical rankine cycle system 14 via a heat exchanger 56 (i.e. heater). The working fluid is heated at a supercritical pressure from a first temperature to a second temperature above a critical temperature of the working fluid. Simultaneously, the heat transfer fluid exiting the heat exchanger 56 is cooled. The working fluid of the supercritical rankine cycle system 14 is used as a coolant in the heat exchanger 56 to facilitate removal of heat from the compressed air 32 via the heat transfer fluid. While compressed air 32 from the first compressor 18 is cooled before it enters the second compressor 20, the working fluid is heated via the heat transfer fluid.

Similar to the embodiment of FIG. 1, the working fluid at a supercritical state is then passed through the expander 46 to drive the generator 48 configured to generate power. The remaining steps in the supercritical rankine cycle system 14 are similar to the embodiment of FIG. 1. The heat transfer fluid is then pumped back from the heat exchanger 56 to the intercooler 34 using a pump 58.

Unlike the conventional systems, in accordance with the embodiments of FIGS. 1 and 2, the working fluid is not evaporated at constant temperature but rather heated in a single phase (without phase change). The working fluid is fed to the expander 46 as a "supercritical, dense, vapor-like fluid". During the expansion process, the working fluid undergoes an expansion and typically enters a superheated fluid state.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A hybrid power generation system (10), comprising:
gas turbine engine system (12) comprising:
a first compressor (18) configured to compress an inlet airflow (30) to produce a first outlet airflow (32) at a first pressure;
an intercooler (34) coupled to the first compressor (18) and configured to cool the first outlet airflow (32) exiting the first compressor (18) to produce a second outlet airflow (36); and
a second compressor (20) coupled to the intercooler (34) and configured to compress the second outlet airflow (36) exiting the intercooler (34) to produce a third outlet airflow (38) at a second pressure; and
a supercritical rankine cycle system (14) coupled to the gas turbine engine system (12), wherein the supercritical rankine cycle system (14) is coupled to the intercooler (34) to circulate a working fluid in heat exchange relationship with the first outlet airflow (32) to heat the working fluid at a supercritical pressure from a first temperature to a second temperature above a critical temperature of the working fluid and to cool the first outlet airflow (32) exiting the first compressor (18).

2. The hybrid power generation system (10) of claim 1, wherein the supercritical rankine cycle system (14) comprises a supercritical organic rankine cycle system.

3. The hybrid power generation system of claim 2, wherein the supercritical organic rankine cycle system is configured to circulate an organic working fluid comprising butane, propane, pentane, cyclohexane, cyclopentane, thiophene, ketones, aromatics, refrigerants including R134a, R245fa, or combinations thereof.

4. The hybrid power generation system (10) of any of the preceding claims, wherein the working fluid is heated at the supercritical pressure from the first temperature to the second temperature above the critical temperature of the working fluid without phase change of the working fluid.

5. The hybrid power generation system (10) of any of the preceding claims, wherein the supercritical rankine cycle system (14) is coupled to the intercooler (34) to circulate the working fluid in heat exchange relationship with the first outlet airflow (32) in a counterflow direction.

6. The hybrid power generation system (10) of any of the preceding claims, wherein the supercritical rankine cycle system (14) comprises an expander (46) configured to expand the heated working fluid received from the intercooler (34) to a lower pressure.

7. The hybrid power generation system of claim 6, wherein the expander is selected from the group comprising a radial type expander, an axial type expander, a high temperature screw type expander, and a reciprocating type expander.

8. The hybrid power generation system of claim 6, wherein the supercritical rankine cycle system further comprises a generator coupled to the expander and configured to generate power.

9. The hybrid power generation system (10) of claim 6, wherein the supercritical rankine cycle system (14) further comprises a condenser (50) coupled to the expander (46) and configured to condense the working fluid fed from the expander (46).

10. The hybrid power generation system of claim 9, where the supercritical rankine cycle system further comprises a pump coupled to the condenser and configured to feed the condensed working fluid at the supercritical pressure from the condenser to the intercooler.

11. The hybrid power generation system of claim 10, wherein a temperature difference between the first outlet airflow and the working fluid is controlled by controlling a mass flow of the working fluid through the intercooler via the pump.

12. The hybrid power generation system of claim 10, where the supercritical rankine cycle system further comprises a recuperator configured to preheat the condensed working fluid fed from the condenser before being fed to the intercooler, by circulating the condensed working fluid in heat exchange relationship with the expanded working fluid fed from the expander.

13. The hybrid power generation system (10) of any of the preceding claims, wherein the gas turbine engine system (12) further comprises a combustor (26) coupled to the second compressor (20) and configured to combust a mixture of fuel (40) and the third outlet airflow (38) exiting the second compressor (20).

14. The hybrid power generation system (10) of any of the preceding claims, wherein the gas turbine engine system (12) further comprises a turbine (22) coupled to the combustor (26) and configured to expand combustion exhaust gas (42) exiting from the combustor (26) to generate power.

15. A method of operation for a hybrid power generation system (10), comprising:
compressing an inlet airflow (30) to produce a first outlet airflow (32) at a first pressure through a first compressor (18);
cooling the first outlet airflow (32) exiting the first compressor (18) to produce a second outlet airflow (36) through an intercooler (34); and
compressing the second outlet airflow (36) exiting the intercooler (34) to produce a third outlet airflow (38) at a second pressure through a second compressor (20);
wherein cooling the first outlet airflow (32) comprises circulating a working fluid of a supercritical rankine cycle system (14) in heat exchange relationship with the first outlet airflow (32) to heat the working fluid at a supercritical pressure from a first temperature to a second temperature above a critical temperature of the working fluid.
